# EUROPÄISCHE PATENTANMELDUNG

(11) **EP 1 844 857 A2**
(43) Veröffentlichungstag der Anmeldung: **17.10.2007**
(21) Anmeldenummer: 07006654.3
(22) Anmeldetag: 30.03.2007
(51) Int. Cl.: B01J 43/00, C02F 1/28

(54) **Amphotere loneaustauscher zur Adsorption von Oxoanionen**

(30) Priorität: 11.04.2006 DE 102006017371
(71) Anmelder: LANXESS Deutschland GmbH, 51369 Leverkusen (DE)
(72) Erfinder: Klipper, Reinhold, Dr., 50933 Köln (DE); Podszun, Wolfgang, Dr., 80469 München (DE); Neumann, Stefan, Dr., 51061 Köln (DE); Schelhaas, Michael, Dr., 50733 Köln (DE); Schäfer, Holger, 50733 Köln (DE); Linn, Thomas, Dr., 41517 Grevenbroich (DE); Zarges, Wolfgang, Dr., 51069 Köln (DE)

(57) **Zusammenfassung**

Die vorliegende Erfindung betrifft die Verwendung amphoterer Ionenaustauscher zur Adsorption von Oxoanionen, bevorzugt die Verwendung Eisenoxid/Eisenoxihydroxid-haltiger amphoterer Ionenaustauscher zur Entfernung von Oxoanionen aus Wasser und wässrigen Lösungen und die Herstellung dieser amphoteren Eisenoxid/Eisenoxihydroxid-haltigen Ionenaustauscher.

## Beschreibung

Die vorliegende Erfindung betrifft die Verwendung amphoterer Ionenaustauscher zur Adsorption von Oxoanionen und deren Thioanaloga, bevorzugt die Verwendung Eisenoxid/Eisenoxihydroxid-haltiger amphoterer Ionenaustauscher zur Entfernung von Oxoanionen aus Wasser und wässrigen Lösungen und die Herstellung dieser amphoteren Eisenoxid/Eisenoxihydroxid-haltigen Ionenaustauscher sowie ein Regenerierungsverfahren.

Oxoanionen im Sinne der vorliegenden Erfindung haben die Formel XₙOₘ⁻, XₙOₘ²⁻, XₙOₘ³⁻, HXₙOₘ⁻ oder H₂XₙOₘ²⁻, worin n für eine ganze Zahl 1, 2, 3 oder 4 steht, m für eine ganze Zahl 3, 4, 6, 7, oder 13 steht und X für ein Metall oder Übergangsmetall der Reihe Au, Ag, Cu, Si, P, S, Cr, Ti, Te, Se, V, As, Sb, W, Mo, U, Os, Nb, Bi, Pb, Co, Ni, Fe, Mn, Ru, Re, Tc, Al, B oder ein Nichtmetall der Reihe F, Cl, Br, J, CN, C, N steht. Erfindungsgemäß bevorzugt steht der Begriff Oxoanionen für die Formeln XOₘ²⁻, XOₘ³⁻, HXOₘ⁻ oder H₂XOₘ²⁻ worin m für eine ganze Zahl 3 oder 4 steht und X für ein Metall oder Übergangsmetall der Reihe P, S, Cr, Te, Se, V, As, Sb, W, Mo, Bi, oder ein Nichtmetall der Reihe Cl, Br, J, C, N steht. Erfindungsgemäß besonders bevorzugt steht der Begriff Oxoanionen für Oxoanionen des Arsens in den Oxidationsstufen (III) und (V), des Antimons in den Oxidationsstufen (III) und (V), des Schwefels als Sulfat, des Phosphors als Phosphat, des Chroms als Chromat, des Wismuts als Bismutat, des Molybdäns als Molybdat, des Vanadiums als Vanadat, des Wolframs als Wolframat, des Selens als Selenat, des Tellur als Tellurat oder des Chlors als Chlorat oder Perchlorat. Erfindungsgemäß insbesondere bevorzugte Oxoanionen sind H₂AsO₃⁻, H₂AsO₄⁻, HAsO₄²⁻, AsO₄³⁻, H₂SbO₃⁻, H₂SbO₄⁻, HSbO₄²⁻, SbO₄³⁻, SeO₄²⁻, ClO₃⁻, ClO₄⁻, BiO₄²⁻, SO₄²⁻, PO ₄³⁻. Erfindungsgemäß ganz besonders bevorzugt sind die Oxoanionen H₂AsO₃⁻, H₂AsO₄⁻, HAsO₄²⁻ und AsO₄³⁻ sowie SeO₄²⁻. Im Sinne der vorliegenden Erfindung umfasst der Begriff Oxoanionen aber auch die Thioanaloga worin anstelle des O in den oben genannten Formeln S für Schwefel steht.

Die Anforderungen an die Reinheit von Trinkwasser haben in den letzten Jahrzehnten deutlich zugenommen. Gesundheitsbehörden zahlreicher Länder haben Grenzwerte für Schwermetallkonzentrationen in Wässern erarbeitet. Dies betrifft insbesondere Schwermetalle wie Arsen, Antimon oder Chrom.

Unter bestimmten Bedingungen können beispielsweise Arsenverbindungen aus Gesteinen ausgelaugt werden und damit ins Grundwasser gelangen. In natürlichen Gewässern kommt Arsen als oxidische Verbindung mit drei- und fünfwertigem Arsen vor. Dabei zeigt sich, dass bei den in natürlichen Gewässern vorherrschenden pH-Werten hauptsächlich die Spezies H₃AsO₃, H₂AsO₃⁻, H₂AsO₄⁻, HAsO₄²⁻ auftreten.

Neben den Chrom-, Antimon- und Selen Verbindungen sind leicht resorbierbare ArsenVerbindungen hoch toxisch und krebserregend. Aber auch das aus dem Erzabbau ins Grundwasser gelangende Wismut ist gesundheitlich nicht unbedenklich.

In vielen Regionen der USA, Indien, Bangladesch, China sowie in Südamerika kommen zum Teil sehr hohe Konzentrationen an Arsen im Grundwasser vor.

Zahlreiche medizinische Studien belegen nun, dass sich bei Menschen, die über eine lange Zeit hohen Arsen Belastungen ausgesetzt sind, infolge chronischer Arsenvergiftung krankhafte Hautveränderungen (Hyperkeratosen) und verschiedene Tumorarten entwickeln können.

Aufgrund medizinischer Studien empfahl die Weltgesundheitsorganisation WHO 1992, weltweit einen Grenzwert für Arsen im Trinkwasser von 10 µg/L einzuführen.

In vielen Staaten Europas und in vielen Gegenden der USA wird dieser Wert noch immer überschritten. In Deutschland werden seit 1996 10 µg/L eingehalten, in Ländern der EU gilt der Grenzwert von 10 µg/L ab 2003, in den USA ab 2006.

Amphotere Ionenaustauscher enthalten nebeneinander saure und basische Gruppen. Verfahren zu deren Herstellung werden in Helfferich Ionenaustauscher, Band 1 Seite 52, Verlag Chemie, Weinheim oder bei Bolto, Pawlowski, Wastewater Treatment, Spon, London, 1986, Seite 5 beschrieben.

Als saure Gruppen kommen bevorzugt Acrylsäure-, Methacrylsäure-, Sulfonsäure-, Iminodiessigsäure- oder Phosphonsäure- Gruppen in Frage. Insbesondere bevorzugt haben die erfindungsgemäß einzusetzenden amphoteren Ionenaustauscher Acrylsäure- und/oder SulfonsäureGruppen.

Als basische Gruppen kommen bevorzugt primäre, sekundäre, tertiäre, quartäre Amino- bzw. Ammonium-Gruppen in Frage. Insbesondere bevorzugt haben die erfindungsgemäß einzusetzenden amphoteren Ionenaustauscher primäre und/oder sekundäre Amino-Gruppen.

Stach, Angewandte Chemie, 63, 263, 1951 beschreibt amphotere Ionenaustauscher, die nebeneinander stark basische und stark saure Gruppen enthalten. Hergestellt werden diese amphoteren Ionenaustauscher durch Mischpolymerisation von Styrol, Vinylchlorid und einem Vernetzer wie beispielsweise Divinylbenzol gefolgt von Quaternierung und Sulfonierung.

In der DE-A 10353534 werden amphotere Ionenaustauscher beschrieben, die nebeneinander sowohl schwachsaure als auch schwachbasische Gruppen enthalten. Als schwachbasische Gruppen werden primäre Aminogruppen genannt, als schwachsaure Gruppen werden Acrylsäure und Alkyl(C₁ - C₄)acrylsäuregruppen, wie beispielsweise Methacrylsäure genannt.

Ionenaustauscher werden in vielfältiger Weise zur Reinigung von Rohwässern, Abwässern und wässrigen Prozessströmen eingesetzt. Auch zur Entfernung von Oxoanionen, beispielsweise dem Arsenat sind Ionenaustauscher geeignet. So beschreiben R. Kunin und J. Meyers in Journal of American Chemical Society, Band. 69, Seite 2874 ff (1947) den Austausch von Anionen, wie beispielsweise Arsenat mit Ionenaustauschern, die primäre, sekundäre, und tertiäre Aminogruppen aufweisen.

Die Entfernung von Arsen aus Trinkwasser mit Hilfe von Ionenaustauschern wird auch in der Monographie Ion Exchange at the Millenium, Imperial College Press 2000, Seite 101 ff beschrieben. In diesem Falle wurden starkbasische Anionenaustauscher mit unterschiedlichen Strukturparametern, z.B. Harze mit Trimethylammoniumgruppen, die sogenannten Typ-I-Harze, auf Styrol oder Acrylatbasis und Harze mit Dimethylhydroxyethylammoniumgruppen, die sogenannten Typ-II-Harze, untersucht.

Nachteilig bei den bekannten Anionenaustauschern ist allerdings, dass sie nicht die gewünschte und notwendige Selektivität und Kapazität für Oxoanionen oder deren Thioanaloga, insbesondere gegenüber Arsenationen, aufweisen. Deshalb ist in Anwesenheit der üblichen im Trinkwasser vorkommenden Anionen die Aufnahmekapazität für Arsenationen nur gering.

In WO 2004/110623 A1 wird ein Verfahren zur Herstellung eines Eisenoxid/Eisenoxihydroxid-haltiger Carboxylgruppen-haltigen Ionenaustauschers beschrieben. Dieses Material adsorbiert Arsen bis zu niedrigen Restkonzentrationen ist aber in seiner Aufnahmekapazität limitiert.

Die EP-A 1 568 660 offenbart ein Verfahren zur Entfernung von Arsen aus Wasser durch in Kontakt bringen mit einem starkbasischen Anionenaustauscher, der ein speziell definiertes Metallion oder ein metallhaltiges Ion enthält. In EP-A 1 568 660 wird darauf hingewiesen, dass die Selektivität gegenüber Arsen ansteigt, wenn sekundäre und tertiäre Aminogruppen durch Alkylierung in quarternäre Ammoniumgruppen überführt werden, wodurch gemäß EP-A 1 568 660 starkbasische Anionenaustauscher charakterisiert sind. Als starkbasische Anionenaustauscher werden nämlich in EP-A 1 568 660 Anionenaustauscher bezeichnet, die positive Ladungen tragen, die wiederum verbunden sind mit Anionen wie Cl⁻, Br⁻, F⁻ oder OH⁻. Im Umkehrschluss zur Aussage in EP-A 1 568 660 sind Anionenaustauscher mit primären, sekundären oder tertiären Amino- Gruppen schwachbasische Anionenaustauscher. Starkbasische Anionenaustauscher werden nämlich gemäß EP-A 1 568 660 allein durch Quaternisierungs-Reaktion von tertiären Amin Substituenten erhalten.

Ferner wird u.a. ein Verfahren zur Entfernung von Arsen aus Wasser durch in Kontakt bringen mit einem starksauren Kationenaustauscher, der ein speziell definiertes Metallion oder ein metallhaltiges Ion enthält, offenbart. Die Aufnahmekapazität ist aber gering. Sie liegt zwischen 14 und 66 mg As / Gramm trockener Ionenaustauscher.

Die aus dem Stand der Technik bekannten Arsenadsorber zeigen noch nicht die gewünschten Eigenschaften hinsichtlich Selektivität und Kapazität. Es besteht daher ein Bedarf nach neuen für Oxoanionen, insbesondere Arsenionen spezifischen Ionenaustauschern bzw. Adsorbern in Perlform, die einfach herzustellen sind und eine verbesserte Arsenadsorption aufweisen.

Die Lösung der Aufgabe und somit Gegenstand der vorliegenden Erfindung ist die Verwendung amphoterer Ionenaustauscher zur Adsorption von Oxoanionen und/oder deren Thioanaloga, bevorzugt aus Wasser oder wässrigen Lösungen. In einer bevorzugten Ausführungsform betrifft die vorliegende Erfindung die Verwendung Eisenoxid/Eisenoxihydroxid-haltiger amphoterer Ionenaustauscher zur Adsorption von Oxoanionen und/oder deren Thioanaloga aus Wasser oder wässrigen Lösungen. In einer weiteren bevorzugten Ausführungsform betrifft die vorliegende Erfindung die Verwendung Eisenoxid/ Eisenoxihydroxid-haltiger amphoterer Ionenaustauscher zur Adsorption von Oxoanionen und/oder deren Thioanaloga aus Wasser oder wässrigen Lösungen die primäre und/oder sekundäre und/oder tertiäre Aminogruppen sowie schwachsaure und / oder starksaure Gruppen enthalten.

Ein weiterer Gegenstand der vorliegenden Erfindung ist ein Verfahren zur Herstellung Eisenoxid/Eisenoxihydroxid-haltiger amphoterer Ionenaustauscher, dadurch gekennzeichnet, dass man
a) einen perlförmigen amphoteren Anionenaustauscher in wässrigem Medium mit Eisen(III)-Salzen oder Eisen(II)-Salzen in Kontakt bringt und
b) die aus a) erhaltene Suspension durch Zugabe von Alkali- oder Erdalkalihydroxiden auf pH-Werte im Bereich von 2,5 bis 12 einstellt und nach bekannten Methoden die erhaltenen Eisenoxid/Eisenoxihydroxid-haltigen amphoteren Ionenaustauscher isoliert.

Angesichts des Standes der Technik war es überraschend, dass diese neuen Eisenoxid/Eisenoxihydroxid-haltigen amphoteren Ionenaustauscher in einfacher Reaktion darstellbar sind und eine gegenüber dem Stand der Technik nicht nur deutlich verbesserte Oxoanionen-Adsorption zeigen, sondern auch generell für den Einsatz zur Adsorption von Oxoanionen und/oder deren Thioanaloga, bevorzugt von Arsenaten, Antimonaten, Phosphaten, Chromaten, Molybdaten, Wismutaten, Wolframaten oder Selenaten, besonders bevorzugt von Arsenaten oder Antimonaten der Oxidationsstufen (III) und (V) oder Selenaten aus wässrigen Lösungen geeignet sind.

Die erfindungsgemäß für die Adsorption von Oxoanionen als Basis einzusetzenden amphoteren Ionenaustauscher können sowohl heterodispers als auch monodispers sein. Erfindungsgemäß bevorzugt werden monodisperse amphotere Ionenaustauscher eingesetzt. Ihre Teilchengröße beträgt im Allgemeinen 250 bis 1250 µm, bevorzugt 280 - 600 µm.

Die den monodispersen amphoteren Ionenaustauschern zugrunde liegenden monodispersen Perlpolymerisate können nach bekannten Verfahren wie z.B. Fraktionieren, Verdüsen, Jetting oder nach der Seed-Feed-Technik hergestellt werden.

Die Herstellung monodisperser Ionenaustauscher ist dem Fachmann prinzipiell bekannt. Man unterscheidet neben der Fraktionierung heterodisperser Ionenaustauscher durch Siebung im wesentlichen zwei Direktherstellungsverfahren nämlich das Verdüsen oder Jetting und das Seed-Feed-Verfahren beim Herstellen der Vorstufen, den monodispersen Perlpolymerisaten. Im Falle des Seed-Feed-Verfahrens wird ein monodisperser Feed eingesetzt, der seinerseits beispielsweise durch Siebung oder durch Jetting erzeugt werden kann. Erfindungsgemäß werden monodisperse, amphotere Ionenaustauscher erhältlich durch Verdüsungsverfahren oder Jetting bevorzugt für die Adsorption von Oxoanionen eingesetzt.

Als monodispers werden in der vorliegenden Anmeldung solche Perlpolymerisate bzw. Ionenaustauscher bezeichnet, bei denen der Gleichheitskoeffizient der Verteilungskurve kleiner oder gleich 1,2 ist. Als Gleichheitskoeffizient wird der Quotient aus den Größen d60 und d10 bezeichnet. D60 beschreibt den Durchmesser, bei welchem 60 Massen-% in der Verteilungskurve kleiner und 40 Massen-% größer oder gleich sind. D10 bezeichnet den Durchmesser, bei welchem 10 Massen-% in der Verteilungskurve kleiner und 90 Massen-% größer oder gleich sind.

Das monodisperse Perlpolymerisat, die Vorstufe des Ionenaustauschers, kann beispielsweise hergestellt werden, indem man monodisperse, gegebenenfalls verkapselte Monomertropfen bestehend aus einer monovinylaromatischen Verbindung, einer polyvinylaromatischen Verbindung, einer Monovinylalkyl Verbindung sowie einem Initiator oder Initiatorgemisch und gegebenenfalls einem Porogen in wässriger Suspension zur Reaktion bringt. Um makroporöse Perlpolymerisate für die Herstellung makroporöser Ionenaustauscher zu erhalten, ist die Anwesenheit von Porogen zwingend erforderlich. Erfindungsgemäß können sowohl gelförmige als auch makroporöse monodisperse amphotere Ionenaustauscher eingesetzt werden. In einer bevorzugten Ausführungsform der vorliegenden Erfindung werden monodisperse amphotere Ionenaustauscher eingesetzt zu deren Herstellung monodisperse Perlpolymerisate unter Einsatz mikroverkapselter Monomertröpfchen verwendet werden. Dem Fachmann sind die verschiedenen Herstellverfahren monodisperser Perlpolymerisate sowohl nach dem Jetting Prinzip als auch nach dem Seed-Feed Prinzip aus dem Stand der Technik bekannt. An dieser Stelle sei verwiesen auf US-A 4,444 961, EP-A 0 046 535, US-A 4,419,245 und WO 93/12167.

Als monovinylaromatische ungesättigte Verbindungen werden erfindungsgemäß bevorzugt Verbindungen wie Styrol, Vinyltoluol, Ethylstyrol, alpha-Methylstyrol, Chlorstyrol oder Chlormethylstyrol eingesetzt.

Als monovinyl ungesättigte Alkylverbindungen werden erfindungsgemäß bevorzugt (Meth)acrylnitril wie z.B. Acrylnitril, Acrylsäurealkylester mit C₁-C₄-Alkylgruppen wie Acrylsäuremethylester oder (C₁-C₄)-Alkyl-acrylsäurealkylester mit C₁-C₄-Alkylgruppen wie z. B. Methacrylsäuremethylester eingesetzt.

Ferner werden bevorzugt (Meth)acrylsäuren eingesetzt.

Als polyvinylaromatische Verbindungen (Vernetzer) werden bevorzugt Divinylgruppen-tragende aliphatische oder aromatische Verbindungen eingesetzt. Besonders bevorzugt werden Divinylbenzol, Divinyltoluol, Trivinylbenzol, Ethylenglylcoldimethacrylat, Trimethylolpropantrimethacrylat, Hexadien-1.5, Octadien-1.7, 2,5-Dimethyl-1,5-hexadien sowie Divinylether eingesetzt.

Geeignete Divinylether sind Verbindungen der allgemeinen Formel (I), 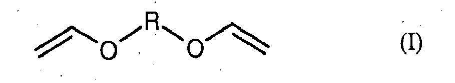 worin
- R: für einen Rest der Reihe CₙH₂ₙ ,(CₘH₂ₘ-O)ₚ-CₘH₂ₘ oder CH₂-C₆H₄-CH₂ steht und n ≥2, m = 2 bis 8 und p ≥2 bedeuten.

Geeignete Polyvinylether im Falle n >2 sind Trivinylether von Glycerin, Trimethylolpropan oder Tetravinylether des Pentaerythrits.

Insbesondere bevorzugt werden Divinylether von Ethylenglykol, Di-, Tetra- oder Polyethylenglykol, Butandiol oder Poly-THF oder die entsprechenden Tri- oder Tetravinylether eingesetzt. Insbesondere ganz besonders bevorzugt sind die Divinylether von Butandiol und Diethylenglykol wie sie in der EP-A 11 10 608 beschrieben sind.

Die alternativ zur gelförmigen Eigenschaft gewünschte makroporöse Eigenschaft wird den Ionenaustauschern bereits bei der Synthese von deren Vorstufen, den Perlpolymerisaten, gegeben. Die Zugabe von sogenanntem Porogen ist dazu zwingend erforderlich. Der Zusammenhang von Ionenaustauschern und ihrer makroporösen Struktur ist in der deutschen Auslegeschrift DE 1045102 (1957) und in der Deutschen Auslegeschrift DE 1113570 (1957) beschrieben. Als Porogen für die Herstellung erfindungsgemäß einzusetzender makroporöser Perlpolymerisate um makroporöse amphotere Ionenaustauscher zu erhalten sind vor allem organische Substanzen geeignet, die sich im Monomeren lösen, das Polymerisat aber schlecht lösen bzw. quellen. Beispielhaft seien aliphatische Kohlenwasserstoffe wie Octan, Isooctan, Decan, Isododecan. Weiterhin gut geeignet sind Alkohole mit 4 bis 10 Kohlenstoffatomen, wie Butanol, Hexanol oder Octanol.

Neben den monodispersen gelförmigen amphoteren Ionenaustauschern sind erfindungsgemäß bevorzugt also monodisperse amphotere Ionenaustauscher mit makroporöser Struktur zur Adsorption von Oxoanionen einzusetzen. Der Begriff "makroporös" ist dem Fachmann bekannt. Einzelheiten werden beispielsweise in J.R. Millar et al J.Chem.Soc.1963, 218 beschrieben. Die makroporösen Ionenaustauscher besitzen ein durch Quecksilberporosimetrie ermitteltes Porenvolumen von 0,1 bis 2,2 ml/g, vorzugsweise von 0,4 bis 1,8 ml/g.

Die Funktionalisierung der nach dem Stand der Technik erhältlichen Perlpolymerisate zu monodispersen, amphoteren Ionenaustauschern ist dem Fachmann ebenfalls weitgehend aus dem Stand der Technik bekannt.

So beschreibt beispielsweise DE-A 10353534 ein Verfahren zur Herstellung monodisperser, makroporöser amphoterer Ionenaustauscher mit schwachbasischen und schwachsauren Gruppen nach dem sogenannten Phthalimidverfahren, indem man
a) Monomertröpfchen aus mindestens einer monovinylaromatischen Verbindung und mindestens einer polyvinylaromatischen Verbindung und mindestens einer Monovinylungesättigten Acrylverbindung sowie einem Porogen und einem Initiator oder einer Initiatorkombination, zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu einem amphoteren Ionenaustauscher mit Aminomethylgruppen und (Meth)acrylsäuregruppen umsetzt und
d) den amphoteren Ionenaustauscher durch Alkylierung zu schwachbasischen bis starkbasischen Anionenaustauschern mit sekundären und/oder tertiären und/oder quartären Aminogruppen reagieren lässt.

Die genannten Perlpolymerisate enthalten Monovinyl ungesättigte Acrylverbindungen wie z.B. Acrylnitril. Im Verlauf der Funktionalisierung nach den Schritten b) c) und d) wird die Acrylnitril-Einheit durch die bei der Funktionalisierung angewandten starksauren bzw. starkbasischen Reaktionsbedingungen in die Acrylsäuregruppe überführt.

Die EP-A 107 86 88 beschreibt die Herstellung monodisperser Anionenaustauscher nach dem Phthalimidverfahren. Als Katalysator bei der Phthalimidomethylierung der monodispersen, makroporösen Perlpolymerisate wird Oleum in einer katalytisch wirksamen Menge eingesetzt.Hierdurch erfolgt keine Einführung starksaurer Sulfonsäuregruppen. Wird die Menge an Oleum über die katalytisch wirksame Menge hinaus erhöht, so erfolgt die Einführung starksaurer Sulfonsäuregruppen. Katalytisch wirksam sind Oleum Mengen von 0,05 bis ca. 0,45 mol freies SO₃ pro mol Phthalimid, das zur Herstellung des Phthalimidomethylierungsagenz eingesetzt wird. Bei Einsatz größerer Oleum Mengen erfolgt sowohl die katalytisch unterstützte Phthalimidomethylierung als auch die Einführung stark saurer Sulfonsäuregruppen.

Zur Herstellung amphoterer Ionenaustauscher, die sowohl starksaure SO₃H-Gruppen als auch schwachbasische Gruppen enthalten, wird daher eine Menge an freiem SO₃ pro mol Phthalimid von größer 0,45 mol eingesetzt. Bevorzugt werden 0,5 bis 2 mol freies SO₃ pro mol Phthalimid, besonders bevorzugt 0,8 - 1,5 mol freies SO₃ pro mol Phthalimid, insbesondere bevorzugt 0,60 bis 1,2 mol freies SO₃ pro mol Phthalimid eingesetzt.

SO₃ wird in Form von Oleum handelsüblicher Konzentration eingesetzt. Gebräuchlich sind Oleum 10 %ig bis Oleum 65 %ig.

Bei Oleum 10 %ig enthalten 100 Gramm 10 Gramm freies SO₃ und 90 Gramm Monoschwefelsäure.Bei Oleum 65 %ig enthalten 100 Gramm 65 Gramm freies SO₃ und 35 Gramm Monoschwefelsäure.

Erfindungsgemäß für die Adsorption von Oxoanionen aus wässrigen Lösungen sind monodisperse, amphotere Ionenaustauscher hergestellt nach dem Phthalimidverfahren bevorzugt. Deren Substitutionsgrad beträgt bis zu 1,6, d.h. pro aromatischem Kern werden im statistischen Mittel bis zu 1,6 Wasserstoffatome durch CH₂NH₂-Gruppen substituiert. Nach dem Phthalimidverfahren können daher hoch kapazitive, nachvernetzungsfreie amphotere Ionenaustauscher hergestellt werden, die nach Umsetzung zu Eisenoxid/Eisenoxihydroxid-haltigen amphoteren Ionenaustauschern sich für die Adsorption von Oxoanionen, bevorzugt von Arsenaten, Antimonaten oder Selenaten und/oder deren Thio-Analoga hervorragend eignen und die primäre und/oder sekundäre und/oder tertiäre Aminogruppen sowie schwach saure und / oder stark saure Gruppen enthalten.

Das Dotieren der amphoteren Ionenaustauschers zu einem Eisenoxid/Eisenoxihydroxid-enthaltenden Ionenaustauscher erfolgt mit Eisen(II)salzen oder Eisen(III)salzen, in einer bevorzugten Ausführungsform mit einem nicht Komplexe bildenden Eisen(II)salz oder Eisen(III)salz. Als Eisen-(III)-Salze im Verfahrensschritt a) des erfindungsgemäßen Verfahrens können lösliche Eisen-(III)-Salze eingesetzt werden, bevorzugt Eisen(III)chlorid, Eisen(III)sulfat oder Eisen(III)nitrat.

Als Eisen-(II)-Salze können alle löslichen Eisen-(H)-Salze eingesetzt werden, insbesondere werden Eisen-(II)-chlorid, -sulfat, -nitrat eingesetzt. Bevorzugt erfolgt die Oxidation der Eisen-(II)-Salze in der Suspension im Verfahrensschritt a) durch Luft.

Die Eisen-(II)-Salze bzw. Eisen-(III)-Salze können in Substanz oder als wässrige Lösungen eingesetzt werden.

Die Konzentration der Eisensalze in wässriger Lösung ist frei wählbar. Bevorzugt werden Lösungen mit Eisensalzgehalten von 20 bis 40 Gew.-% eingesetzt.

Die Dosierung der wässrigen Eisensalzlösung ist zeitlich unkritisch. Sie kann in Abhängigkeit von den technischen Gegebenheiten so zügig wie möglich erfolgen.

Die amphoteren Ionenaustauscher können unter Rühren oder durch Filtration in Säulen mit den Eisensalzlösungen in Kontakt gebracht werden.

Pro Mol eingesetztem Eisensalz werden 1 bis 10 Mol, bevorzugt 3 bis 6 Mol Alkali- oder Erdalkalihydroxide eingesetzt.

Pro Mol funktioneller Gruppe im Ionenaustauscher werden 0,05 bis 3 Mol, bevorzugt 0,2 bis 1,2 Mol Eisensalz eingesetzt.

Die Einstellung des pH-Wertes im Verfahrensschritt b) erfolgt mittels Alkali- oder Erdalkalihydroxiden, insbesondere Kaliumhydroxid, Natriumhydroxid oder Calziumhydroxid, Alkali - oder Erdalkalicarbonaten oder Hydrogencarbonaten.

Der pH-Wert Bereich, in dem die Bildung von Eisenoxid/Eisenoxihydroxid-Gruppen erfolgt, liegt im Bereich zwischen 2 und 12, bevorzugt 3 und 9.

Die genannten Stoffe werden bevorzugt als wässrige Lösungen eingesetzt.

Die Konzentration der wässrigen Alkalihydroxid- bzw. Erdalkalihydroxid- Lösungen kann bis zu 50 Gew.-% betragen. Bevorzugt werden wässrige Lösungen mit einer Alkalihydroxid- bzw. Erdalkalihydroxid- Konzentration im Bereich 20 bis 40 Gew.-% eingesetzt.

Die Geschwindigkeit der Dosierung der wässrigen Lösungen an Alkali- bzw. Erdalkalihydroxid ist abhängig von der Höhe des gewünschten pH-Wertes und den technischen Gegebenheiten. Beispielsweise werden 120 Minuten hierzu benötigt.

Nach Erreichen des gewünschten pH-Wertes werden 1 bis 10 Stunden, bevorzugt 2 bis 4 Stunden nachgerührt.

Die Dosierung der wässrigen Lösungen an Alkali- bzw. Erdalkalihydroxid erfolgt bei Temperaturen zwischen 10 und 90°C, bevorzugt bei 30 bis 60°C.

Pro Milliliter amphoterem Ionenaustauscherharz werden 0,5 bis 3 ml entionisiertes Wasser eingesetzt, um eine gute Rührfähigkeit des Harzes zu erreichen.

Ohne für die vorliegende Anmeldung einen Mechanismus vorzuschlagen werden im Verfahrensschritt b) wahrscheinlich durch die pH-Wert-Änderung in den Poren der Ionenaustauscherharze FeOOH-Verbindungen gebildet, die an der Oberfläche frei zugängliche OH-Gruppen tragen. Die Oxoanionen-Entfernung, bevorzugt die Arsenentfernung, erfolgt dann wahrscheinlich über einen Austausch OH⁻ gegen beispielsweise HAsO₄²⁻ bzw. H₂AsO₄⁻ unter Ausbildung einer AsO-Fe-Bindung.

Erfindungsgemäß wird bei der Synthese des Eisenoxid/Eisenoxihydroxid-haltigen amphoteren Ionenaustauschers bevorzugt NaOH oder KOH als Base eingesetzt. Es kann aber auch jede andere Base verwendet werden, die zur Ausbildung von FeOH-Gruppen führt, wie beispielsweise NH₄OH, Na₂CO₃, CaO, Mg(OH)₂ usw.

Isolieren im Sinne der vorliegenden Erfindung bedeutet im Herstellverfahrensschritt b) ein Abtrennen des Ionenaustauschers aus der wässrigen Suspension und dessen Reinigung. Die Abtrennung erfolgt nach den für den Fachmann bekannten Maßnahmen wie Dekantieren, Zentrifugieren, Filtrieren. Die Reinigung erfolgt durch Waschen mit beispielsweise entionisiertem Wasser und kann eine Klassierung zur Abtrennung von Feinanteilen bzw. Grobanteilen beinhalten. Gegebenenfalls kann der erhaltene Eisenoxid/Eisenoxihydroxid-enthaltende amphotere Ionenaustauscher getrocknet werden, bevorzugt durch reduzierten Druck und/oder besonders bevorzugt bei Temperaturen zwischen 20°C und 180°C.

Überraschenderweise adsorbieren die erfindungsgemäßen amphoteren Ionenaustauscher nicht nur Oxoanionen und/oder deren Thioanaloga, beispielsweise des Arsens in seinen verschiedensten Formen, sondern daneben zusätzlich Schwermetalle wie beispielsweise Kobalt, Nickel, Blei, Zink, Cadmium, Kupfer. Erfindungsgemäß bevorzugt wird die Aufgabe durch die Eisenoxid/Eisenoxyhydroxid-haltigen amphoteren Ionenaustauscher gelöst.

Wie bereits oben beschrieben gleichermaßen zum Ionenaustausch durch die erfindungsgemäß einzusetzenden amphoteren Ionenaustauscher befähigt sind auch zu HAsO₄²⁻ bzw. H₂AsO₄⁻ isostrukturelle Ionen wie z. B. Dihydrogenphosphate, Vanadate, Molybdate, Wolframate, Antimonate, Wismutate , Selenate oder Chromate. Die erfindungsgemäß zu synthetisierenden amphoteren Ionenaustauscher eignen sich insbesondere bevorzugt zur Adsorption der Spezies H₂AsO₃⁻, H₂AsO₄⁻, HAsO₄²⁻, AsO₄³⁻, H₂SbO₃⁻, H₂SbO₄⁻, HSbO₄²⁻, SbO₄³⁻, SeO₄²⁻.

Die erfindungsgemäß einzusetzenden amphoteren Ionenaustauscher, bevorzugt die Eisenoxid/Eisenoxihydroxid-haltigen amphoteren Ionenaustauscher, können zur Reinigung von Oxoanionen und deren Thioanaloga enthaltenden Wässern jeglicher Art, bevorzugt von Trinkwasser, von Abwasserströmen der chemischen Industrie oder von Müllverbrennungsanlagen sowie von Grubenwässern oder Sickerwässern von Deponien verwendet werden.

Die erfindungsgemäß einzusetzenden amphoteren Ionenaustauscher, bevorzugt die erfindungsgemäßen Eisenoxid/Eisenoxihydroxid-haltigen amphoteren Ionenaustauscher werden bevorzugt in für ihre Aufgaben geeigneten Vorrichtungen eingesetzt.

Die Erfindung betrifft deshalb auch von einer zu behandelnden Flüssigkeit durchströmbare Vorrichtungen, bevorzugt Filtrationseinheiten, besonders bevorzugt Adsorptionsbehälter, insbesondere Filteradsorptionsbehälter, gefüllt mit den amphoteren Ionenaustauschern, bevorzugt mit Eisenoxid/Eisenoxihydroxid-haltigen amphoteren Ionenaustauschern erhältlich nach dem in dieser Anmeldung beschriebenen Verfahren, zur Entfernung von Oxoanionen und deren Thioanaloga, bevorzugt zur Entfernung von Arsen, Antimon oder Selen, insbesondere von Arsen, aus wässrigen Medien oder Gasen, bevorzugt Trinkwasser. Die Vorrichtungen können z.B. im Haushalt an die Sanitär- und Trinkwasserversorgung angeschlossen werden.

Es hat sich gezeigt, dass die amphoteren Ionenaustauscher, bevorzugt die Eisenoxid/Eisenoxihydroxid-haltigen amphoteren Ionenaustauscher, sich durch alkalische Natriumchlorid-Lösungen einfach regenerieren lassen. Gegenstand der vorliegenden Erfindung ist deshalb auch ein Regenerierungsverfahren amphoterer Ionenaustauscher, bevorzugt Eisenoxid/Eisenoxihydroxid-haltiger amphoterer Ionenaustauscher, dadurch gekennzeichnet, dass man auf diese eine alkalische Natriumchlorid-Lösung einwirken lässt. Bevorzugt hat diese Natriumchlorid-Lösung einen Gehalt an Natriumchlorid von 0,1 bis 10 Gew.-%, besonders bevorzugt von 1 bis 3 Gew.-% und einen pH-Wert von 6 bis 13, bevorzugt von 8 bis 11, besonders bevorzugt von 9 bis 10. In einer bevorzugten Ausführungsform der erfindungsgemäßen Regeneration behandelt man den regenerierten Adsorber zusätzlich mit verdünnten, bevorzugt 1-10 gew.-%igen Mineralsäuren, insbesondere bevorzugt mit Schwefelsäure oder Salzsäure.

### Untersuchungsmethoden

### Bestimmung der Aufnahmefähigkeit für Arsen in der Oxidationsstufe V:

Zur Messung der Adsorption von Arsen(V) werden in einer 300 ml Polyethylen-Flasche 24 Stunden lang 250 ml einer wässrigen Lösung von Na₂HAsO₄, mit einer Menge an As(V) von 2800 ppb auf einen pH Wert von 8,5 eingestellt und mit 0,3 ml Arsenadsorber geschüttelt. Nach 24 Stunden wird in der überstehenden Lösung die Restmenge an Arsen (V) analysiert.

### Bestimmung der Menge an basischen Aminomethylgruppen im aminomethylierten, vernetzten Polystyrol Perlpolymerisat

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml vollentsalztem Wasser und 100 ml 1n Salzsäure versetzt. Die Suspension wird 30 Minuten gerührt und anschließend in eine Glassäule gefüllt. Die Flüssigkeit wird abgelassen. Es werden weitere 100 ml 1n Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminomethyliertem Harz errechnet sich nach folgender Formel: ( 200 - V) · 20 = mol Aminomethylgruppen pro Liter Harz, worin V für Volumen der bei der Titration verbrauchten 1 n Natronlauge steht.

### Bestimmung des Substitutionsgrades der aromatischen Kerne des vernetzten Perlpolymerisates durch Aminomethylgruppen

Die Menge Aminomethylgruppen in der Gesamtmenge des aminomethylierten Harzes wird nach obiger Methode bestimmt.

Aus der Menge eingesetzten Perlpolymerisats - A in Gramm - wird durch Division mit dem Molekulargewicht die in dieser Menge vorliegende Molmenge an Aromaten errechnet.

Beispielsweise werden aus 300 Gramm Perlpolymerisat 950 ml aminomethyliertes Perlpolymerisat mit einer Menge von 1,8 mol/l Aminomethylgruppen hergestellt.

950 ml aminomethyliertes Perlpolymerisat enthalten 2,82 mol Aromaten.

Pro Aromat liegen dann 1,8 / 2,81 = 0,64 mol Aminomethylgruppen vor.

Der Substitutionsgrad der aromatischen Kerne des vernetzten Perlpolymerisates durch Aminomethylgruppen beträgt 0,64.

### Bestimmung der Menge an starksauren Gruppen

Als starksaure Gruppen liegen Sulfonsäuregruppen vor. Ihre Menge wird durch elementaranalytische Bestimmung des Schwefelgehaltes des amphoteren Ionenaustauschers oder durch Titration der Gruppen bestimmt.

50 ml amphoterer Ionenaustauscher werden in eine Säule gefüllt. Innerhalb von 2 Stunden werden 200 ml 4 gew.-%ige Schwefelsäure überfiltriert. Anschließend wird mit 1000 ml vollentsalztem Wasser gewaschen.

Von dieser Harzmasse werden 20 ml entnommen und in einen Probebecher überführt.50 ml voll entsalztes Wasser werden hinzu dosiert. Die Suspension wird gerührt. Es werden weitere 90 ml vollentsalztes Wasser und 5 Gramm Natriumchlorid dosiert. Die Suspension wird 15 Minuten gerührt. Anschließend wird mit 1 n Natronlauge bis pH 4,3 titriert.

Das Harz wird abfiltriert, mit 100 ml vollentsalztem Wasser gewaschen und sein Volumen bestimmt. Dieses ist das Volumen in der Natriumform.

Verbrauch an 1 n Natronlauge / 20 = Totalkapazität der H - Form in mol starksaure Gruppen / Liter Harz.

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Bestimmung der Stabilität des Harzes nach dem Walztest

Das zu prüfende Perlpolymerisat wird in gleichmäßiger Schichtdicke zwischen zwei Kunststofftücher verteilt. Die Tücher werden auf eine feste, waagerecht angebrachte Unterlage gelegt und in einer Walzapparatur 20 Arbeitsakten unterworfen. Ein Arbeitstakt besteht aus einer vor und zurück durchgeführten Walzung. Nach dem Walzen werden an repräsentativen Mustern an 100 Perlen durch Auszählen unter dem Mikroskop die Anzahl der unversehrten Perlen ermittelt.

### Quellungsstabilitätstest

In eine Säule werden 25 ml Anionenaustauscher in der Chloridform eingefüllt. Nacheinander werden 4 gew.-%ige wässrige Natronlauge, vollentsalztes Wasser, 6 gew.-%ige Salzsäure und nochmals voll entsalztes Wasser in die Säule gegeben, wobei die Natronlauge und die Salzsäure von oben durch das Harz fließen und das vollentsalzte Wasser von unten durch das Harz gepumpt wird. Die Behandlung erfolgt zeitgetaktet über ein Steuergerät. Ein Arbeitszyklus dauert 1 h. Es werden 20 Arbeitszylken durchgeführt. Nach Ende der Arbeitszyklen werden von dem Harzmuster 100 Perlen ausgezählt. Ermittelt wird die Anzahl der perfekten Perlen, die nicht durch Risse oder Absplitterungen geschädigt sind.

### Bestimmung der Menge an schwach- und stark basischen Gruppen in Anionenaustauschern

100 ml Anionenaustauscher werden in einer Glassäule in 1 Stunde und 40 Minuten mit 1 000 ml 2 gew.-%iger Natronlauge beaufschlagt. Anschließend wird das Harz mit vollentsalztem Wasser zur Entfernung des Überschusses an Natronlauge gewaschen.

Bestimmung der NaCl-Zahl

50 ml des in der freien Basenform und neutral gewaschenen Austauschers werden in eine Säule gegeben und mit 950 ml 2,5 gew.-%iger wässriger Natriumchloridlösung beaufschlagt. Der Ablauf wird aufgefangen, mit vollentsalztem Wasser auf 1 Liter aufgefüllt und hiervon werden 50 ml mit 0,1 n Salzsäure titriert. Das Harz wird mit vollentsalztem Wasser gewaschen.

Verbrauchte ml 0,1 n Salzsäure x 4 / 100 = NaCl-Zahl in mol/Liter Harz.

### Bestimmung der NaNO₃-Zahl

Dann werden 950 ml 2,5 gew.-%ige Natriumnitratlösung überfiltriert. Der Ablauf wird mit vollentsalztem Wasser auf 1 000 ml aufgefüllt. Hiervon wird ein aliquoter Teil - 10 ml - abgenommen und auf seinen Chloridgehalt durch Titration mit Quecksilbernitratlösung analysiert.

### Bestimmung der HCl-Zahl

Das Harz wird mit vollentsalztem Wasser gewaschen und in ein Becherglas gespült. Es wird mit 100 ml 1 n Salzsäure versetzt und 30 Minuten lang stehen gelassen. Die gesamte Suspension wird in eine Glassäule gespült. Weitere 100 ml Salzsäure werden über das Harz filtriert. Das Harz wird mit Methanol gewaschen. Der Ablauf wird mit vollentsalztem Wasser auf 1 000 ml aufgefüllt. Hiervon werden 50 ml mit 1 n Natronlauge titriert.

(20 - verbrauchte ml 1 n Natronlauge) / 5 = HCl-Zahl in mol / Liter Harz.

Die Menge an stark basischen Gruppen ist gleich der Summe aus NaNO₃-Zahl und HCl-Zahl.

Die Menge an schwach basischen Gruppen ist gleich der HCl-Zahl.

### Beispiel 1

### 1a) Herstellung eines monodispersen, makroporösen Perlpolymerisates auf der Basis von Styrol, Divinylbenzol und Ethylstyrol

In einem 10 1 Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g mikroverkapselter Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertröpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 1b) Herstellung eines amidomethylierten Perlpolymerisates

Bei Raumtemperatur werden 3567 g Dichlorethan, 867 g Phthalimid und 604 g 29,8 gew.-%iges Formalin vorgelegt. Der pH Wert der Suspension wird mit Natronlauge auf 5,5 bis 6 eingestellt. Anschließend wird das Wasser destillativ entfernt. Dann werden 63,5 g Schwefelsäure zudosiert. Das entstehende Wasser wird destillativ entfernt. Der Ansatz wird abgekühlt. Bei 30°C werden 232 g 65 %iges Oleum und anschließend 403 g monodisperses Perlpolymerisat, hergestellt nach Verfahrensschritt 1a) eindosiert. Die Suspension wird auf 70°C erhitzt und weitere 6 Stunden bei dieser Temperatur gerührt. Die Reaktionsbrühe wird abgezogen, vollentsalztes Wasser wird hinzudosiert und Restmengen an Dichlorethan werden destillativ entfernt.

Ausbeute an amidomethyliertem Perlpolymerisat : 2600 ml

| Elementaranalytische Zusammensetzung: | |
|---|---|
| Kohlenstoff: | 74,9 Gew. % |
| Wasserstoff: | 4,6 Gew. % |
| Stickstoff: | 6,0 Gew. % |
| Rest: | Sauerstoff |

### 1c) Herstellung eines aminomethylierten Perlpolymerisates

Zu 1250 ml amidomethyliertem Perlpolymerisat aus 1b) werden 624 g 50 gew.-%ige Natronlauge und 1093 ml vollentsalztes Wasser bei Raumtemperatur zudosiert. Die Suspension wird in 2 Stunden auf 180°C erhitzt und 8 Stunden bei dieser Temperatur gerührt. Das erhaltene Perlpolymerisat wird mit vollentsalztem Wasser gewaschen.

### Ausbeute an aminomethyliertem Perlpolymerisat : 1110 ml

Als Gesamtausbeute - hochgerechnet - ergeben sich 2288 ml.

| Elementaranalytische Zusammensetzung: | |
|---|---|
| Stickstoff : | 12,6 Gew. % |
| Kohlenstoff: | 78,91Gew. % |
| Wasserstoff: | 8,5 Gew. % |

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 1,34 Wasserstoffatome durch Aminomethylgruppen substituiert wurden.

Bestimmung der Menge an basischen Gruppen : 2,41 mol/ Liter Harz

### 1d) Herstellung eines Perlpolymerisates mit tertiären Aminogruppen

In einem Reaktor werden 1380 ml vollentsalztes Wasser, 920 ml aminomethyliertes Perlpolymerisat aus 1c) und 490 g 29,7 gew.-%ige Formalinlösung bei Raumtemperatur vorgelegt. Die Suspension wird auf 40°C erwärmt. Der pH Wert der Suspension wird durch Dosierung von 85 gew.-%iger Ameisensäure auf pH 3 eingestellt. Innerhalb von 2 Stunden wird die Suspension auf Rückflusstemperatur (97°C) erwärmt. Während dieser Zeit wird der pH Wert durch Dosierung von Ameisensäure bei 3,0 gehalten. Nach Erreichen der Rückflusstemperatur wird der pH Wert zunächst durch Dosierung von Ameisensäure, dann durch Dosierung von 50 gew.-%iger Schwefelsäure auf 2 eingestellt. Es wird 30 Minuten bei pH 2 nachgerührt. Dann wird weiter 50 gew.-%ige Schwefelsäure hinzu dosiert und der pH Wert auf 1 eingestellt. Bei pH 1 und Rückflußtemperatur wird weitere 8,5 Stunden gerührt.

Der Ansatz wird abgekühlt, das Harz auf einem Sieb abfiltriert und mit vollentsalztem Wasser gewaschen.

Volumenausbeute: 1430 ml

In einer Säule werden über das Harz 2500 ml 4 gew.-%ige wässrige Natronlauge filtriert. Anschließend wird mit Wasser gewaschen.

### Volumenausbeute : 1010 ml

| Elementaranalytische Zusammensetzung : | |
|---|---|
| Stickstoff : | 12,4 Gew. % |
| Kohlenstoff: | 76,2 Gew. % |
| Wasserstoff: | 8,2 Gew. % |
| Bestimmung der Menge an basischen Gruppen : | 2,22 mol/ Liter Harz |

### Beispiel 2

### Herstellung eines amphoteren Ionenaustauschers mit schwachbasischen und schwachsauren Gruppen

### 2a) Herstellung eines monodispersen, makroporösen Perlpolymerisates auf der Basis von Styrol, Divinylbenzol, Ethylstyrol und Acrylnitril

Bezogen auf die Gesamtmenge an Monomeren enthält die Monomermischung 3 Gew.-% Acrylnitril.

In einem 101 Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Es werden 53 Gramm Acrylnitril dosiert. Die Mischung wird auf 25°C temperiert. Unter Rühren wird anschließend eine Mischung aus 3200 g mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertröpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1950 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

Der Stickstoffgehalt des Polymeren beträgt 0,9 Gew. %.

Ausbeute an Perlpolymerisat : 1950 Gramm bezogen auf die Gesamtmenge an Monomeren bedeutet dies 99,5 Gew. % Ausbeute.

### 2b) Herstellung eines amidomethylierten Perlpolymerisates

Bei Raumtemperatur werden 634 ml Dichlorethan, 235,2 g Phthalimid und 165,4 g 29,6 gew.-%iges Formalin vorgelegt. Der pH Wert der Suspension wird mit Natronlauge auf 5,5 bis 6 eingestellt. Anschließend wird das Wasser destillativ entfernt. Dann werden 17,3 g Schwefelsäure zudosiert. Das entstehende Wasser wird destillativ entfernt. Der Ansatz wird abgekühlt. Bei 30°C werden 68,3 g 65 %iges Oleum und anschließend 242,2 g monodisperses Perlpolymerisat, hergestellt nach Verfahrensschritt 2a) eindosiert. Die Suspension wird auf 70°C erhitzt und weitere 6 Stunden bei dieser Temperatur gerührt. Die Reaktionsbrühe wird abgezogen, vollentsalztes Wasser wird hinzudosiert und Restmengen an Dichlorethan werden destillativ entfernt.

Ausbeute an amidomethyliertem Perlpolymerisat : 1100 ml

50 ml Harz eingerüttelt wiegen trocken 20,2 Gramm

| Elementaranalytische Zusammensetzung: | |
|---|---|
| Kohlenstoff: | 77,9 Gew. % |
| Wasserstoff: | 5,2 Gew. % |
| Stickstoff: | 5,0 Gew. % |
| Rest: | Sauerstoff |

### 2c) Herstellung eines amphoteren Ionenaustauschers mit schwachsauren und schwachbasischen Gruppen

Zu 1060 ml amidomethyliertem Perlpolymerisat aus 2b) werden 379 g 50 gew.-%ige Natronlauge und 1024 ml vollentsalztes Wasser bei Raumtemperatur zudosiert. Die Suspension wird in 2 Stunden auf 180°C erhitzt und 8 Stunden bei dieser Temperatur gerührt. Das erhaltene Perlpolymerisat wird mit vollentsalztem Wasser gewaschen.

Ausbeute an aminomethyliertem Perlpolymerisat : 740 ml

| Elementaranalytische Zusammensetzung : | |
|---|---|
| Stickstoff : | 7,3 Gew. % |
| Kohlenstoff: | 81,2 Gew. % |
| Wasserstoff: | 7,7 Gew. % |

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 0,66 Wasserstoffatome durch Aminomethylgruppen substituiert wurden.

### Bestimmung der Menge an basischen Gruppen : 1,40 mol/ Liter Harz

Bestimmung der Menge an schwachsauren Gruppen : 0,08 mol/ Liter Harz

### 2d) Herstellung eines amphoteren Ionenaustauschers mit schwach sauren und stark basischen Gruppen

In einem Autoklav werden bei Raumtemperatur 700 ml aminomethyliertes Perlpolymerisat aus Beispiel 2b) und 1177 ml voll entsalztes Wasser eingetragen. Dazu werden nacheinander 216 ml 50 gew.-%ige Natronlauge und 319 ml Chlormethan dosiert. Die Suspension wird auf 40°C erwärmt und 16 Stunden bei dieser Temperatur gerührt.

Anschließend wird der Ansatz auf Raumtemperatur abgekühlt. Die Suspension wird auf ein Sieb gegeben. Das erhaltene Harz wird mit Wasser gewaschen und anschließend in eine Glasfrittensäule gefüllt. Über das Harz werden 300 ml 5 gew.-%ige wässrige Natriumchloridlösung filtriert. Die Harzmasse wird durch Einleiten von Luft gewirbelt und anschließend zur Entfernung löslicher Verunreinigungen und kleinerer Partikel mit Wasser klassiert.

Volumenausbeute: 1070 ml
NaCl-Zahl: 0,536 mol/l
NaNO₃-Zahl: 1,292 mol/l
HCl-Zahl: 0,118 mol/l

Originalstabilität: 97 % ganze Perlen
Walzstabilität: 95 % ganze Perlen
Quellungsstabilität: 90 % ganze Perlen

### Beispiel 3

### Herstellung eines amphoteren Ionenaustauschers mit schwachbasischen und starksauren Gruppen

### 3a) Herstellung eines amidomethylierten Perlpolymerisates

Bei Raumtemperatur werden 1212 ml Dichlorethan, 451 g Phthalimid und 317 g 29,8 gew.-%iges Formalin vorgelegt. Der pH Wert der Suspension wird mit Natronlauge auf 5,5 bis 6 eingestellt. Anschließend wird das Wasser destillativ entfernt. Dann werden 33 g Schwefelsäure zudosiert. Das entstehende Wasser wird destillativ entfernt. Der Ansatz wird abgekühlt. Bei 30°C werden 245 g 65 %iges Oleum und anschließend 186 g monodisperses Perlpolymerisat, hergestellt nach Verfahrensschritt 1a) eindosiert. Die Suspension wird auf 70°C erhitzt und weitere 6 Stunden bei dieser Temperatur gerührt. Die Reaktionsbrühe wird abgezogen, vollentsalztes Wasser wird hinzudosiert und Restmengen an Dichlorethan werden destillativ entfernt.

Ausbeute an amidomethyliertem Perlpolymerisat : 1420 ml

| Elemeritaranalytische Zusammensetzung: | |
|---|---|
| Kohlenstoff: | 70,7 Gew. %; |
| Wasserstoff: | 4,3 Gew. %; |
| Stickstoff: | 6,3 Gew. %; |
| Schwefel | 0,2 Gew. % |

50 ml feuchtes Harz wiegen getrocknet 21,8 Gramm.

### 3b) Herstellung eines aminomethylierten Perlpolymerisates

Zu 1390 ml amidomethyliertem Perlpolymerisat aus 3a) werden 677 g 50 gew.-%ige Natronlauge und 1226 ml vollentsalztes Wasser bei Raumtemperatur zudosiert. Die Suspension wird in 2 Stunden auf 180°C erhitzt und 8 Stunden bei dieser Temperatur gerührt. Das erhaltene Perlpolymerisat wird mit vollentsalztem Wasser gewaschen.

Ausbeute an aminomethyliertem Perlpolymerisat : 1120 ml

| Elementaranalytische Zusammensetzung: | |
|---|---|
| Stickstoff : | 12,7 Gew.-% |
| Kohlenstoff: | 67,5 Gew.-% |
| Wasserstoff: | 7,6 Gew.-% |
| Schwefel: | 1,8 Gew.-% |

30 ml Harz wiegen trocken 7,276 Gramm

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 1,15 Wasserstoffatome durch Aminomethylgruppen substituiert wurden.

Bestimmung der Menge an basischen Gruppen : 2,01 mol / Liter Harz

Bestimmung der Menge an starksauren Gruppen: 0,15 mol / Liter Harz

### 3c) Herstellung eines amphoteren Ionenaustauschers mit stark sauren und stark basichen Gruppen

In einen Autoklav werden bei Raumtemperatur 550 ml aminomethyliertes Perlpolymerisat aus Beispiel 2b) und 937 ml voll entsalztes Wasser eingetragen. Dazu werden nacheinander 173 ml 50 gew.-%ige Natronlauge und 275 ml Chlormethan dosiert. Die Suspension wird auf 40°C erwärmt und 16 Stunden bei dieser Temperatur gerührt.

Anschließend wird der Ansatz auf Raumtemperatur abgekühlt. Die Suspension wird auf ein Sieb gegeben. Das erhaltene Harz wird mit Wasser gewaschen und anschließend in eine Glasfrittensäule gefüllt. Über das Harz werden 300 ml 5 gew.-%ige wässrige Natriumchloridlösung filtriert. Die Harzmasse wird durch Einleiten von Luft gewirbelt und anschließend zur Entfernung löslicher Verunreinigungen und kleinerer Partikel mit Wasser klassiert.

Volumenausbeute: 845 ml
NaCl-Zahl: 0,620 mol/l
NaNO₃-Zahl: 1,115 mol/l
HCl-Zahl: 0,09 mol/l

Originalstabilität: 96 % ganze Perlen
Walzstabilität: 92 % ganze Perlen
Quellungsstabilität: 92 % ganze Perlen

### Beispiel 4

### Herstellung eines Oxoanionenaustauschers auf der Basis eines amphoteren Ionenaustauschers mit schwachbasischen und schwachsauren Gruppen

In eine Glassäule (Länge 50 cm, Durchmesser 12 cm) werden 210 ml vollentsalztes Wasser und 350 ml aminomethyliertes Perlpolymerisat aus Beispiel 2 c) vorgelegt. Von oben werden in 2 Stunden 227 ml 40 gew.-%ige, wässrige Eisen(III)sulfatlösung beaufschlagt. Anschließend wird von unten Luft durch die Suspension geleitet in der Weise, dass das Harz gewirbelt wird. Während des gesamten Ausfäll- und Beladungsvorganges wird mit Luft gewirbelt. Die Suspension zeigt einen pH Wert von 1,5 . Unter Wirbeln wird von oben 50 gew. % ige Natronlauge dosiert. Der pH Wert der Suspension wird schrittweise auf 3,0 : 3,5 : 4,0 : 4,5 : 5,0 : 5,5 : 6,0 : 6,5 : 7,0 eingestellt. Nach Erreichen der pH Wertabschnitte wird jeweils weitere 15 Minuten nachgewirbelt. Nach Erreichen von pH 7,0 wird eine weitere Stunde bei diesem pH Wert gewirbelt. Nach Erreichen des pH Wertes von 3,5 werden weitere 200 ml vollentsalztes Wasser dosiert. Anschließend wird das Harz auf ein Sieb gegeben und mit vollentsalztem Wasser ausgewaschen. Dann wird zur weiteren Reinigung das Harz in einer Glassäule 2 Stunden lang mit volleritsalztem Wasser von unten gespült und klassiert.

Verbrauch an 50 gew. % iger Natronlauge : 78 ml

Volumenausbeute : 440 ml

100 ml Harz wiegen getrocknet : 35,85 Gramm

Perldurchmesser : 340 µ

### Beispiel 5

### Herstellung eines Oxoanionenaustauschers auf der Basis eines amphoteren Ionenaustauschers mit schwachbasischen und starksauren Gruppen

In eine Glassäule (Länge 50 cm, Durchmesser 12 cm) werden 159 ml vollentsalztes Wasser und 265 ml aminomethyliertes Perlpolymerisat aus Beispiel 3b) vorgelegt. Von oben werden in 2 Stunden 262 ml 40 gew.-%ige, wässrige Eisen(III)sulfatlösung beaufschlagt. Anschließend wird von unten Luft durch die Suspension geleitet in der Weise, dass das Harz gewirbelt wird. Während des gesamten Ausfäll- und Beladungsvorganges wird mit Luft gewirbelt. Die Suspension zeigt einen pH Wert von 1,5. Unter Wirbeln wird von oben 50 gew. % ige Natronlauge dosiert. Der pH Wert der Suspension wird schrittweise auf 3,0 : 3,5 : 4,0 : 4,5 : 5,0 eingestellt. Nach Erreichen der pH Wertabschnitte wird jeweils weitere 15 Minuten nachgewirbelt. Nach Erreichen von pH 5,0 werden 2 weitere Stunden bei diesem pH Wert gewirbelt. Nach Erreichen des pH Wertes von 3,5 werden weitere 300 ml vollentsalztes Wasser dosiert. Anschließend wird das Harz auf ein Sieb gegeben und mit vollentsalztem Wasser ausgewaschen. Dann wird zur weiteren Reinigung das Harz in einer Glassäule 2 Stunden lang mit vollentsalztem Wasser von unten gespült und klassiert.

### Verbrauch an 50 gew. % iger Natronlauge : 88 ml

Volumenausbeute : 260 ml

100 ml Harz wiegen getrocknet : 45,02 Gramm

Eisengehalt : 17 Gew. %

Natriumgehalt: 12 mg / kg

## Patentansprüche

1. Verwendung amphoterer Ionenaustauscher zur Adsorption von Oxoanionen und/oder deren Thioanaloga aus Wasser oder deren wässrigen Lösungen.

2. Verwendung gemäß Anspruch 1, **dadurch gekennzeichnet, dass** die amphoteren Ionenaustauscher Eisenoxid/Eisenoxyhydroxid enthalten.

3. Verwendung gemäß Anspruch 1 oder 2, **dadurch gekennzeichnet, dass** die einzusetzenden Ionenaustauscher monodispers sind.

4. Verwendung gemäß einem der Ansprüche 1 bis 3, **dadurch gekennzeichnet, dass** es sich um monodisperse makroporöse Ionenaustauscher handelt.

5. Verwendung gemäß der Ansprüche 3 und 4, **dadurch gekennzeichnet, dass** die Vorstufe des monodispersen Ionenaustauschers nach dem Verdüsungs- oder Jetting Verfahren hergestellt wird.

6. Verwendung gemäß der Ansprüche 1 bis 5, **dadurch gekennzeichnet, dass** die Oxoanionen der Formeln XₙOₘ⁻, XₙOₘ²⁻, XₙOₘ³⁻, HXₙOₘ⁻ oder H₂XₙOₘ²⁻ worin n für eine ganze Zahl 1, 2, 3 oder 4 steht, m für eine ganze Zahl 3, 4, 6, 7, oder 13 steht und X für ein Metall oder Übergangsmetall der Reihe Au, Ag, Cu, Si, P, S, Cr, Ti, Te, Se, V, As, Sb, W, Mo, U, Os, Nb, Bi, Pb, Co, Ni, Fe, Mn, Ru, Re, Tc, B, Al, oder ein Nichtmetall der Reihe F, Cl, Br, J, CN, C, N steht adsorbiert werden.

7. Verwendung gemäß der Ansprüche 1 bis 6, **dadurch gekennzeichnet dass** die amphoteren Ionenaustauscher primäre und/oder sekundäre und/oder tertiäre Aminogruppen sowie schwachsaure und/oder starksaure Gruppen enthalten.

8. Verwendung gemäß der Ansprüche 1 bis 7, **dadurch gekennzeichnet, dass** die zu reinigenden Wässer Abwasserströme der chemischen Industrie oder von Müllverbrennungsanlagen, Grubenwässer oder Sickerwässer von Deponien sind.

9. Verwendung gemäß der Ansprüche 1 bis 8, **dadurch gekennzeichnet dass** die amphoteren Ionenaustauscher in von der zu behandelnden Flüssigkeit durchströmbare Vorrichtungen eingesetzt werden.

10. Verfahren zur Herstellung Eisenoxid/Eisenoxihydroxid-haltiger amphoterer Ionenaustauscher, **dadurch gekennzeichnet, dass** man
a) einen perlförmigen amphoteren Ionenaustauscher in wässrigem Medium mit Eisen (II)- oder Eisen(III)-Salzen in Kontakt bringt und
b) die aus a) erhaltene Mischung durch Zugabe von Alkali- oder Erdalkalihydroxiden auf pH-Werte im Bereich von 2,5 bis 12 einstellt und nach bekannten Methoden die erhaltenen Eisenoxid/Eisenoxihydroxid-enthaltenden Ionenaustauscher isoliert.

11. Regenerierungsverfahren amphoterer Ionenaustauscher, bevorzugt Eisenoxid/Eisenoxihydroxid-haltiger amphoterer Ionenaustauscher, **dadurch gekennzeichnet, dass** man auf diese eine alkalische Natriumchlorid-Lösung einwirken lässt.

12. Regenerierungsverfahren gemäß Anspruch 11, **dadurch gekennzeichnet, dass** man den regenerierten Adsorber zusätzlich mit verdünnten Mineralsäuren behandelt.
